# EUROPEAN PATENT SPECIFICATION

(11) **EP 3 076 830 B1**
(45) Date of publication and mention of the grant of the patent: **20.06.2018**
(21) Application number: 14809963.3
(22) Date of filing: 02.12.2014
(51) Int. Cl.: A47J 31/20

(54) **TEA-STEEPING APPLIANCES**
VORRICHTUNGEN ZU ZIEHEN VON TEE
APPAREILS MÉNAGERS DE TREMPAGE DE THÉ

(30) Priority: 02.12.2013 GB 201321203
(43) Date of publication of application: 12.10.2016
(73) Proprietor: Kenwood Limited, Havant, Hampshire PO9 2NH (GB)
(72) Inventor: SEALY, James, Havant, Hampshire PO9 2NH (GB)
(74) Representative: Hector, Annabel Mary
(86) International application number: PCT/GB2014/053583
(87) International publication number: WO 2015/082911

(56) References cited:
- WO-A1-2008/049163
- DE-A1-102011 009 429
- DE-U1- 7 829 662
- DE-U1-202007 004 517
- US-A1- 2008 274 246

## Description

This invention relates to tea-steeping appliances in the form of electrically powered kettles, jugs or pots.

Conventionally, tea is brewed by pouring boiling water over loose tea-leaves or tea-bags, either in a cup or in a suitable receptacle, such as a teapot. Whilst this is, of course, an acceptable procedure for the varieties of tea that are more commonly used, it does not produce optimal results if used with teas, such as green tea, having varied and more subtle flavours, which many people favour nowadays.

In particular, boiling water is too hot for today's modern popular tea types like green tea, flower-based, fruit-based, and herbal infusion teas, as it tends to burn the tea, making it taste bitter. In addition, the delicate aroma of the tea tends to be lost. On the other hand, if water that is too cool is used, the flavours will not be fully extracted.

Moreover, if the tea leaves are left in a kettle or teapot for too long, the tea can over-steep and again taste bitter, and furthermore, if no steps are taken to the contrary, the infused tea cools and is thus not maintained at drinkable temperatures.

Difficulties thus arise in making tea with water at a temperature that respects the particular type of tea being brewed and in maintaining brewed tea at a drinkable temperature without over-steeping it and the present invention aims to reduce or eliminate these difficulties.

In addition, a good deal of energy is wasted in making tea with water that is too hot and in receptacles that are too large for the amount of tea required, as well as in failing to maintain already brewed tea at an acceptable temperature for drinking, resulting in the tea being disposed of, instead of being drunk.

Embodiments of the invention aim to address these issues also.

US 2008/027246 discloses automatic apparatus for brewing a hot beverage with a positioner assembly for submerging an infused basket in heated liquid.

According to the invention there is provided a tea-making appliance comprising a lidded vessel adapted to contain water, an electric heater for heating to a pre-set temperature water contained in the vessel, an apertured container adapted to contain tea leaves, means suspending said container from the lid of the vessel and electrically powered means arranged to lower into and raise said container out of the water in accordance with a start and finish respectively of a prescribed brewing programme and to agitate said container during part at least of the said brewing programme.

In some preferred embodiments of the invention, the prescribed brewing programme is manually set up by a user of the appliance and may also be manually adjustable as to at least one parameter, such as temperature and/or brewing time, during the programme.

In other preferred embodiments of the invention, the prescribed brewing programme is automatically implemented, based upon input data indicative of a type of tea being brewed. In such circumstances, the input data may be provided by user-manipulation of identification keys,
symbols or some other interface device, or the input data may be provided by means of an automatic procedure such as a bar-code, associated with the tea or its packaging, which is readable by means incorporated into the appliance.

Preferably the said electric heater, or a further heater incorporated into the appliance, is adapted to maintain the temperature of brewed tea at a prescribed level for at least a predetermined period of time after the finish of the brewing programme.

In preferred embodiments of the invention, the container is suspended from the lid by means of a stainless steel wire, rope or chain.

It is further preferred that the electrically powered means for lowering into and raising said container out of the water in accordance with a start and finish respectively of a prescribed brewing programme and for agitating said container during part at least of the said brewing programme comprises an electric motor and associated gearing. Preferably, the motor is mounted either in a handle or in the lid of the appliance.

The motor may derive its operating power directly or indirectly from the same electrical source as said heater. Alternatively, the motor may be battery powered (rechargeable or otherwise), or powered by a capacitive arrangement.

The invention extends to a tea-making appliance as described with reference to and/or as shown in the accompanying drawings.

The invention extends to methods and/or apparatus substantially as herein described with reference to the accompanying drawings.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In order that the invention may be clearly understood and readily carried into effect, certain embodiments thereof will now be described, by way of example only, with reference to the accompanying drawings, of which:
Figure 1 shows a tea-making appliance in accordance with one embodiment;
Figure 2 shows a tea-making appliance in accordance with another embodiment;
Figure 3 is a side view of a tea-making appliance according to a further embodiment;
Figure 4 is a cross-sectional side view of the appliance of Figure 3;
Figure 5 is a perspective view of the interior of the lid of the appliance of Figure 3;
Figure 6 is a further cross-sectional side view of the appliance of Figure 3; and
Figure 7 is a perspective view of a tea-making appliance according to yet another embodiment.

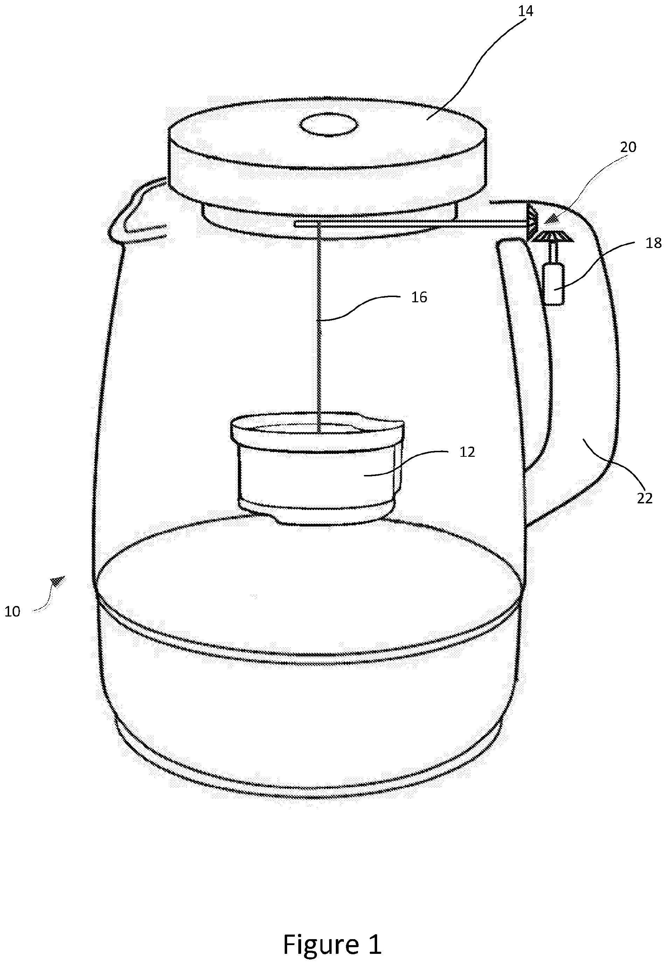

Referring now to Figure 1, a tea-making appliance in accordance with a first embodiment of the invention comprises a lidded vessel 10, in this case a kettle-like vessel, constructed to hold and heat water. The vessel 10 incorporates an electric heater (not shown) for heating water in the vessel, and control circuitry of known kind for controlling the heater such that the water can be heated to a chosen temperature, which is either presettable by the user, by manipulating interface controls on the vessel 10, or automatically in response to recognition of the type of tea to be brewed.

The vessel 10 contains an apertured, basket-like container 12 adapted to contain tea leaves (either loose or in bags), and the container 12 is suspended from the lid 14 of the vessel 10 by a suitable suspension device 16, such as a stainless steel wire, rope or chain. The container 12 can be raised and lowered relative to the lid 14 by means of a small electric motor 18 and a gearing arrangement shown schematically as a simple bevelled gear system 20. It will be appreciated that it is possible to employ any mechanical contrivance for raising and lowering the container 12 under the control of the motor 18, subject to the ability of such contrivance to reliably endure the hot and humid working conditions which are encountered in operation.

In operation, tea is placed in the container 12 and the components 16, 18 and 20 are set to hold the container 12 parked adjacent the lid 14, above the level of water in the vessel 10, until the water has reached the pre-set temperature. The motor 18 is then operated to extend the suspension device 16 and lower the container 12 into the heated water for a predetermined period dictated by a chosen brewing programme, which may be user-selected or automatically set in response to an identity code or similar data on packaging for the tea being used. At the end of the brewing period, the motor 18 is operated in the reverse direction to raise the container 12 and reposition it in its parking place near the lid 14, thereby to prevent over-steeping of the tea.

During part at least of the brewing programme, i.e. whilst the tea is immersed in the water, the container 12 is preferably agitated, for example by having the motor 18 execute repeated brief forward and reverse movements.

The motor 18 is a small, low-voltage electric motor which, in this embodiment of the invention, is housed in a hollowed handle 22 of the vessel 10. The motor may be powered in any convenient manner, for example it may be powered via suitable voltage transformation or other electrical circuitry, from the mains electricity to power the heater of the vessel 10. Alternatively, the motor may be battery powered, and the batteries used may, for example, be rechargeable from the mains supply fed to the vessel 10. Capacitive power supplies can alternatively be used if preferred.

It will be appreciated that the lid 14 may either be hingedly attached to the vessel 10 or removable, although it is preferred to use a hinged lid, as this simplifies operation for the user.

After the brewing programme has concluded, and the container 12 is again parked near the lid 14, the heater of the vessel 10 is controlled to maintain the temperature of the brewed tea at a chosen drinking temperature.

The vessel 10 may carry on its outer surface interface control elements (not shown) such as press or touch buttons and an associated display, such as an LCD screen or an array of LEDs, to enable operating selections to be made and to enable the selections and/or the progress of the brewing programme to be indicated to the user.

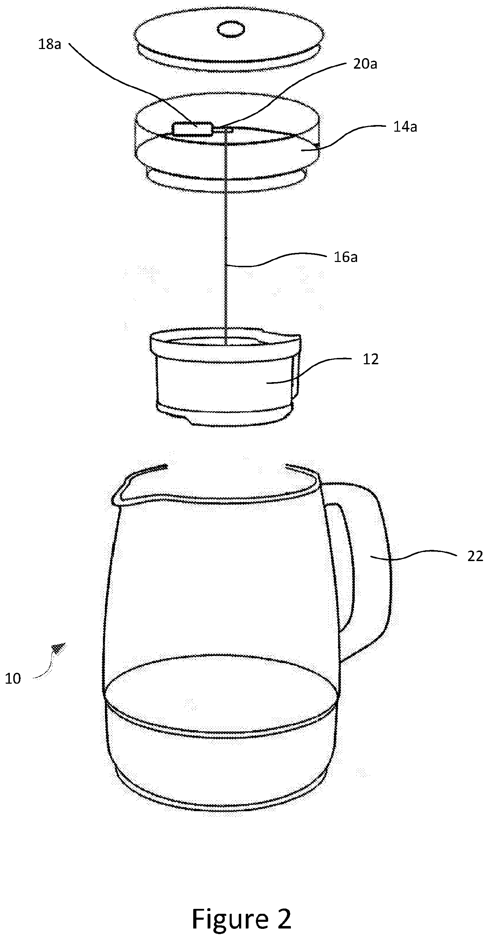

Figure 2 shows a second embodiment, which is similar to the first embodiment in all respects, except for the fact that the motor 18a is housed in a recess in a base part of the lid 14a instead of the handle 22. This configuration simplifies the gearing arrangement 20a used to connect the suspension device 16a to the motor 18a. On the other hand, the motor 18a is exposed to greater amounts of heat than is the handle-mounted motor 18 in the embodiment shown in Figure 1 and moreover, if the power to the motor 18a is derived from the electrical supply to the vessel's heater, the connection arrangements are somewhat more difficult to make.

As mentioned with reference to the first embodiment described above, the lid of the vessel 10 may be removable but is preferably hinged to the body of the vessel.

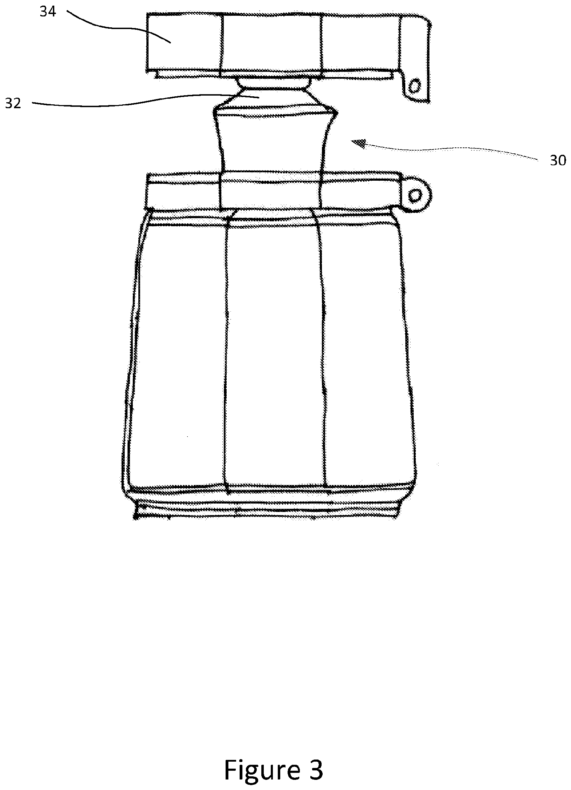

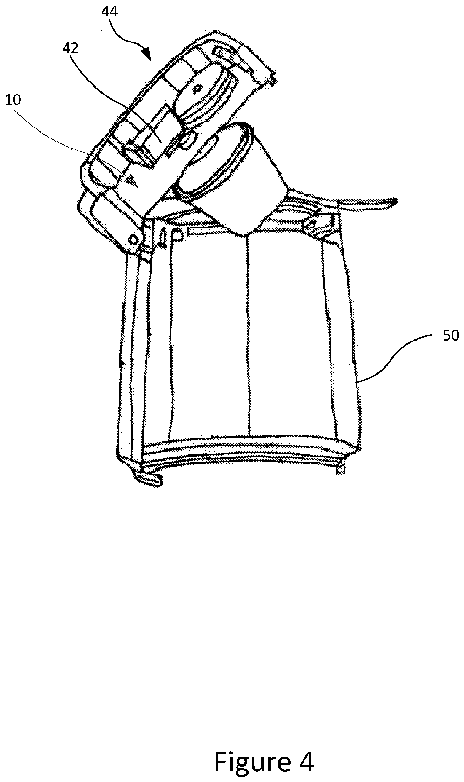

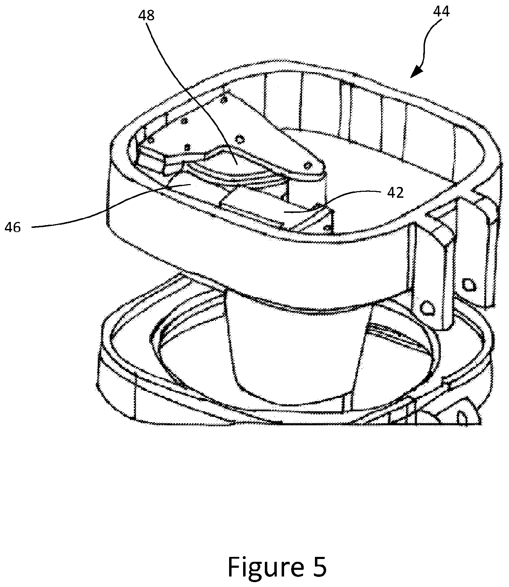

In the embodiment shown in Figures 3 to 6, the tea basket 30 is provided with a cover 32 at the upper surface thereof for attachment to the lid 34. The cover is frustoconical in shape, with a flattened portion 36 at the centre thereof. A disc-shaped magnet 38 is attached to the wire for raising and lowering the basket 30, the magnet 38 having a shape and size corresponding to the flattened portion 36. The basket 30 can therefore readily be attached to and detached from the lid 34 by the magnet 38.

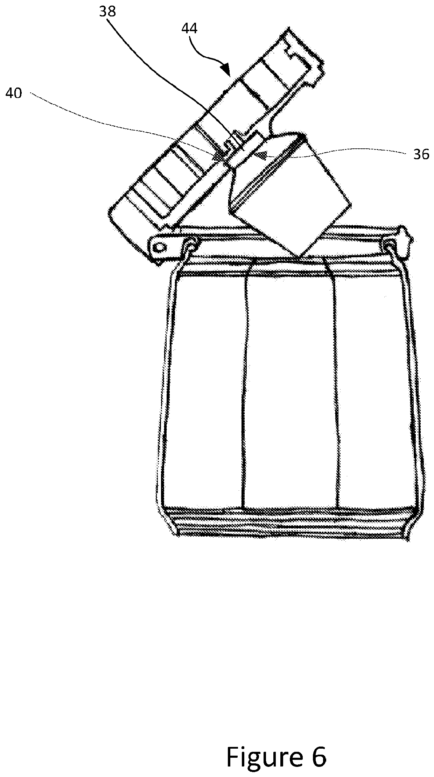

The attachment between the magnet 38 and the surround 32 also retains the basket 30 against the lid 34 in the default or home position when the lid 34 is opened, as shown in Figure 6. In this position, the magnet 38 is nested in a recess 40 in the underside of the lid 34, holding the magnet 38 securely in place.

An electric motor 42 may be housed within a cavity 44 of the lid 34, such as a 6V DC motor. The motor may be sealed in a housing within the cavity 44. The motor 42 drives a worm gear 46, which in turn drives a geared wheel 48. The wheel 48 carries a spool of wire, such as stainless steel wire, the free end of which is attached to the magnet 38. Thus, the motor may drive the wheel 48 backwards and forwards to lower or raise the basket 30 attached to the magnet 38.

The lid 34 may be hinged to the device body 50, or may alternatively be removable from the body 50. The lid may include a latch member for interlocking with a corresponding latch member mounted on the body 50, the latch being arranged to lock the lid in a closed position while the device is operating. This is to prevent cycling of the basket and/or disruption of the tea-making process. The latch may be arranged to disengage and allow opening of the lid when the basket 30 is secured back under the lid in the default position.

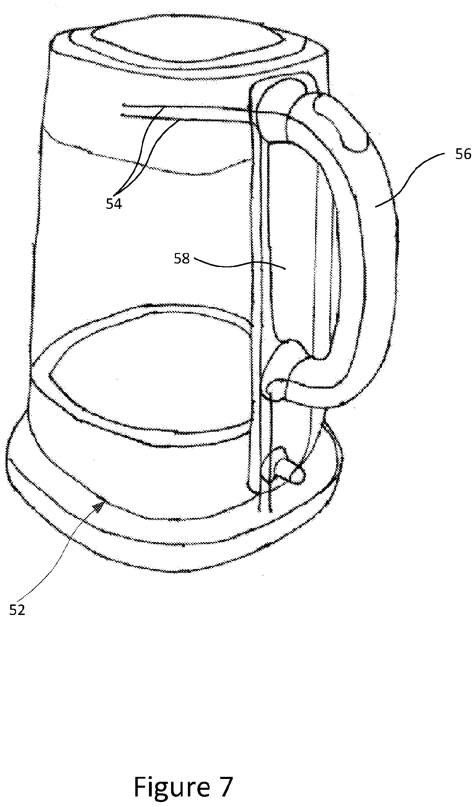

Referring to Figure 7, a power connection is shown between a base 52 of the device, and the motor. A pair of conductors such as wires 54, which may for example carry between 6V and 24V DC, run from the base 52 to the lid cavity either through a handle 56 or through a finger guard 58 on which the handle 56 is mounted.

In one example, the cycle time for lowering and raising the basket 30 is about 2.5 minutes, but can be customisable depending upon the strength preference of the user. This is typically repeated around six times per day, to provide six pots of tea. The speed selection may be adjustable for different infusion requirements, for example for different types of tea. The travel distance of the basket is typically around 125mm, and the time taken may be about 10 seconds. The basket 30 may for example weigh about 120g.

## Claims

1. A tea-making appliance comprising a lidded vessel (10) adapted to contain water, an electric heater for heating to a pre-set temperature water contained in the vessel, an apertured container (12) adapted to contain tea leaves, means (16) suspending said container from the lid (14) of the vessel and electrically powered means (18) arranged to lower into and raise said container out of the water in accordance with a start and finish respectively of a prescribed brewing programme and **characterised in that** the electrically powered means is arranged to agitate said container during at least part of said brewing programme.

2. An appliance according to claim 1, wherein the prescribed brewing programme is manually set up by a user of the appliance.

3. An appliance according to claim 2, wherein means are provided for manual adjustment of at least one parameter of the brewing programme, such as temperature and/or brewing time.

4. An appliance according to claim 1, wherein means are provided for implementing the prescribed brewing programme automatically, based upon input data indicative of a type of tea being brewed.

5. An appliance according to claim 4, further comprising a manual interface device for user manipulation to input said data.

6. An appliance according to claim 4, further comprising a reading device for deriving said input data by responding automatically to input data readable by the device and associated with the tea or its packaging.

7. An appliance according to any preceding claim, wherein the said electric heater, or a further heater incorporated into the appliance, is adapted to maintain the temperature of brewed tea at a prescribed level for at least a predetemlined period of time after the finish of the brewing programme.

8. An appliance according to any preceding claim, wherein said means suspending the container comprises a stainless steel wire, rope or chain.

9. An appliance according to any preceding claim, wherein the electrically powered means arranged to lower and raise said container into and out of the water in accordance with a start and finish respectively of a prescribed brewing programme and arranged to agitate said container during at least part of said brewing programme comprises an electric motor (18) and associated gearing (20).

10. An appliance according to claim 9, wherein the motor (18) is mounted in a handle (22) of the vessel.

11. An appliance according to claim 9, wherein the motor (18) is mounted in the lid (14) of the vessel.

12. An appliance according to any of claims 9, 10 and 11, wherein the motor (18) derives its operating power directly or indirectly from the same electrical source as said heater.

13. An appliance according to any of claims 9, 10 and 11, wherein the motor (18) derives its operating power from one or more batteries and/or a capacitive supply.

14. An appliance according to any preceding claim, wherein the lid (14) of the vessel is hingedly mounted to the vessel body.

## Patentansprüche

1. Teezubereitungsvorrichtung, die Folgendes umfasst: einen mit Deckel versehenen Behälter (10), der Wasser enthalten kann, eine elektrische Heizvorrichtung zum Aufheizen von Wasser, das in dem Behälter enthalten ist, auf eine voreingestellte Temperatur, einen mit Öffnungen versehenen Behälter (12), der Teeblätter aufnehmen kann, ein Mittel (16) zum Aufhängen des genannten Behälters von dem Deckel (14) des Behälters und ein elektrisch betriebenes Mittel (18), das dafür ausgelegt ist, den genannten Behälter gemäß dem Beginn bzw. der Beendigung eines vorgeschriebenen Brühprogramms in das Wasser abzusenken und diesen aus dem Wasser heraus zu heben und **dadurch gekennzeichnet, dass** das elektrisch betriebene Mittel dafür ausgelegt ist, den genannten Behälter während mindestens eines Teils des genannten Brühprogramms zu rühren.

2. Vorrichtung nach Anspruch 1, wobei das vorgeschriebene Brühprogramm von einem Benutzer der Vorrichtung manuell eingerichtet wird.

3. Vorrichtung nach Anspruch 2, wobei ein Mittel zur manuellen Einstellung mindestens eines Parameters des Brühprogramms wie Temperatur und/oder Brühzeit vorgesehen ist.

4. Vorrichtung nach Anspruch 1, wobei ein Mittel vorgesehen ist, um das vorgeschriebene Brühprogramm basierend auf Eingabedaten, die eine Art von gebrühtem Tee anzeigen, automatisch zu implementieren.

5. Vorrichtung nach Anspruch 4, das ferner eine manuelle Schnittstellenvorrichtung zur Benutzermanipulation zur Eingabe der genannten Daten umfasst.

6. Vorrichtung nach Anspruch 4, die ferner eine Lesevorrichtung zum Ableiten der genannten Eingabedaten durch automatisches Antworten auf Eingabedaten umfasst, die von der Vorrichtung lesbar sind und dem Tee oder seiner Verpackung zugeordnet sind.

7. Vorrichtung nach einem der vorhergehenden Ansprüche, wobei die genannte elektrische Heizvorrichtung oder eine weitere Heizvorrichtung, die in die Vorrichtung eingebaut ist, dafür ausgelegt ist, die Temperatur von gebrühtem Tee für mindestens eine vorbestimmte Zeitperiode nach dem Ende des Brühprogramms auf einem vorgeschriebenen Niveau zu halten.

8. Vorrichtung nach einem der vorhergehenden Ansprüche, wobei das genannte Mittel zum Aufhängen des Behälters einen rostfreien Stahldraht, ein Seil oder eine Kette umfasst.

9. Vorrichtung nach einem der vorhergehenden Ansprüche, wobei das elektrisch betriebene Mittel für Folgendes ausgelegt ist: Absenken in das Wasser und Herausheben aus dem Wasser des genannten Behälters jeweils gemäß einem Start und Ziel eines vorgeschriebenen Brühprogramms und Rühren des genannten Behälters während mindestens eines Teils des genannten Brühprogramms, wozu sie einen Elektromotor (18) und ein zugehöriges Getriebe (20) aufweist.

10. Vorrichtung nach Anspruch 9, wobei der Motor (18) in einem Griff (22) des Behälters angebracht ist.

11. Vorrichtung nach Anspruch 9, wobei der Motor (18) im Deckel (14) des Behälters angebracht ist.

12. Vorrichtung nach einem der Ansprüche 9, 10 und 11, wobei der Motor (18) seine Betriebsleistung direkt oder indirekt von der gleichen Stromquelle wie die genannte Heizvorrichtung bezieht.

13. Vorrichtung nach einem der Ansprüche 9, 10 und 11, wobei der Motor (18) seine Betriebsleistung aus einer oder mehreren Batterien und/oder einer kapazitiven Versorgung bezieht.

14. Vorrichtung nach einem der vorhergehenden Ansprüche, wobei der Deckel (14) des Behälters gelenkig am Behälterkörper angebracht ist.

## Revendications

1. Appareil pour préparer le thé comprenant un réceptacle à couvercle (10) conçu pour contenir de l'eau, un dispositif de chauffage électrique pour chauffer à une température préréglée l'eau contenue dans le réceptacle, un contenant à ouvertures (12) conçu pour contenir des feuilles de thé, un moyen (16) de suspension dudit contenant depuis le couvercle (14) du réceptacle et un moyen alimenté électriquement (18) agencé pour abaisser et relever ledit contenant jusque dans et hors de l'eau selon un début et une fin respectivement d'un programme d'infusion prescrit et **caractérisé en ce que** le moyen alimenté électriquement est agencé pour agiter ledit contenant pendant au moins une partie dudit programme de diffusion.

2. Appareil selon la revendication 1, dans lequel le programme de diffusion prescrit est réglé manuellement par un utilisateur de l'appareil.

3. Appareil selon la revendication 2, dans lequel des moyens sont fournis pour ajuster manuellement au moins un paramètre du programme d'infusion, tel que la température et/ou le temps d'infusion.

4. Appareil selon la revendication 1, dans lequel des moyens sont fournis pour mettre en oeuvre automatiquement le programme d'infusion prescrit, en fonction de données saisies indiquant un type de thé infusé.

5. Appareil selon la revendication 4, comprenant en outre un dispositif d'interface manuel pour la manipulation par l'utilisateur pour saisir ladite donnée.

6. Appareil selon la revendication 4, comprenant en outre un dispositif de lecture pour dériver ladite donnée saisie en répondant automatiquement à la donnée saisie lisible par le dispositif et associée au thé ou à son emballage.

7. Appareil selon l'une quelconque des revendications précédentes, dans lequel ledit dispositif de chauffage électrique, ou un autre dispositif de chauffage incorporé jusque dans l'appareil, est conçu pour maintenir la température du thé infusé à un niveau prescrit pendant au moins une période de temps prédéterminée après la fin du programme d'infusion.

8. Appareil selon l'une quelconque des revendications précédentes, dans lequel ledit moyen de suspension dudit contenant comprend un fil, un câble ou une chaîne en acier inoxydable.

9. Appareil selon l'une quelconque des revendications précédentes, dans lequel le moyen alimenté électriquement agencé pour abaisser et relever ledit contenant jusque dans et hors de l'eau selon un début et une fin respectivement d'un programme d'infusion prescrit et agencé pour agiter ledit contenant pendant au moins une partie dudit programme de diffusion comprend un moteur électrique (18) et une transmission (20) associée.

10. Appareil selon la revendication 9, dans lequel le moteur (18) est monté dans une poignée (22) du réceptacle.

11. Appareil selon la revendication 9, dans lequel le moteur (18) est monté dans le couvercle (14) du réceptacle.

12. Appareil selon l'une quelconque des revendications 9, 10 et 11, dans lequel le moteur (18) dérive sa puissance de fonctionnement directement ou indirectement de la même source électrique que ledit dispositif de chauffage.

13. Appareil selon l'une quelconque des revendications 9, 10 et 11, dans lequel le moteur (18) dérive sa puissance de fonctionnement d'une ou de plusieurs piles et/ou d'une source capacitive.

14. Appareil selon l'une quelconque des revendications précédentes, dans lequel le couvercle (14) du réceptacle est monté de manière articulée sur le corps de réceptacle.
